# EUROPEAN PATENT SPECIFICATION

(11) **EP 3 632 743 B1**
(45) Date of publication and mention of the grant of the patent: **07.06.2023**
(21) Application number: 19200983.5
(22) Date of filing: 02.10.2019
(51) Int. Cl.: B60P 1/54, B60P 3/41, A01G 23/00, B60P 3/30

(54) **LOAD-HANDLING DEVICE**
LASTHANDHABUNGSVORRICHTUNG
DISPOSITIF DE MANIEMENT DE CHARGES

(30) Priority: 02.10.2018 FI 20185821
(43) Date of publication of application: 08.04.2020
(73) Proprietor: Kuljetusliike Aro Oy, 19910 Tammijärvi (FI)
(72) Inventor: Inkeroinen, Timo, 19910 Tammijärvi (FI)
(74) Representative: Kolster Oy Ab

(56) References cited:
- CN-A- 104 692 011
- CN-U- 202 242 822
- CN-U- 207 644 350
- DE-A1-102006 022 567
- JP-A- H0 718 880
- JP-U- H 076 406

## Description

### Background of the invention

The invention relates to handling wood material in connection with transporting wood material.

It is possible to transport wood material, such as e.g. logs, pulpwood, woodchips, sawdust and logging waste, by transport means equipped for the purpose, such as e.g. by combined vehicles constituted of a tractor vehicle equipped for the purpose in question and of one or more trailers. Timber trucks open of their load space and equipped with pylons are used for transporting logs and pulpwood. Combined vehicles provided with load spaces substantially closed at least of their bottom, sides and ends can again be used for transporting e.g. woodchips, sawdust and logging waste.

A load of wood material can be loaded to a combined vehicle and/or unloaded from a combined vehicle by a load-handling device designed for the purpose. The load-handling device can comprise at least one boom, at least one handling means of wood material arranged to said at least one boom for picking wood material to be supported by the handling means of wood material and the boom for transferring wood material by using the boom and said handling means of wood material and at least one control device for controlling the use of the boom and/or the handling means of wood material.

When loading and unloading wood material, it is possible that the actual wood material or some other material attached to it, such as sand, snow or some other material classified as waste in relation to the wood material being transported, can end up on top of the load or in the structures of the combined vehicle, whereby they become loose of the combined vehicle after the combined vehicle starts and end up on the path of the combined vehicle unless they are removed before the combined vehicle starts off. For example, the bottom structures of the load space of a timber truck are cleaned after unloading by the driver by brushing. This is still laborious, and walking on the bottom structures of the load space can cause the risk of stumbling or slipping. Furthermore, the cleaning result is rarely good, because the bottom structures of the load space have not been designed to consider their cleaning requirement. On the other hand, cleaning waste ended up on top of the load of a loaded timber truck is not currently even possible.

Publication JP H07 18880 A discloses a sprinkler loaded on a hydraulic shovel for sprinkling water in the direction of demolishing as a building is demolished by the hydraulic shovel. DE-publication 10 2006 022567 A1 discloses a timber truck comprising a timber lifter, the preamble of claim 1.

### Brief description of the invention

An object of the invention is to develop a novel type of a load-handling device for loading and/or unloading a load of wood material.

The solution according to the invention is characterized by what is disclosed in the independent claims.

The invention is based on a load-handling device for loading and/or unloading wood material comprising at least one nozzle arranged to a boom and/or handling means of wood material, at least one flow channel connected to the nozzle, via which, the nozzle is connectable to at least one pressure source for feeding pressurized fluid flow via the flow channel to the nozzle for feeding the fluid flow out of the nozzle, and at least one second control device for controlling the use of the fluid flow.

An advantage of the invention is that it is possible to feed pressurized air via the nozzle as a spray out of the nozzle, whereby, by moving the handling means of wood material and/or the boom simultaneously, it is possible to clean the empty load space or the top of the load of a transport means used for transporting wood material by means of a spray of pressurized air of waste remaining there, such as twigs, sand and snow, before the transport device starts off. The spray of pressurized air will unfasten the waste from the transport device and throw them away from the transport device or its structures or load.

Some embodiments of the invention are presented in the dependent claims.

### Brief description of the figures

The invention is now described in closer detail in connection with preferred embodiments and with reference to the accompanying drawings, in which
Fig. 1 is a schematic side view of a timber truck equipped with a timber lifter, and
Fig. 2 is a schematic, partially sectional side view of a detail of Fig. 1.

For reasons of clarity, some embodiments of the invention are illustrated in the figures in a simplified form. In the figures, like reference numerals identify like elements.

### Detailed description of the invention

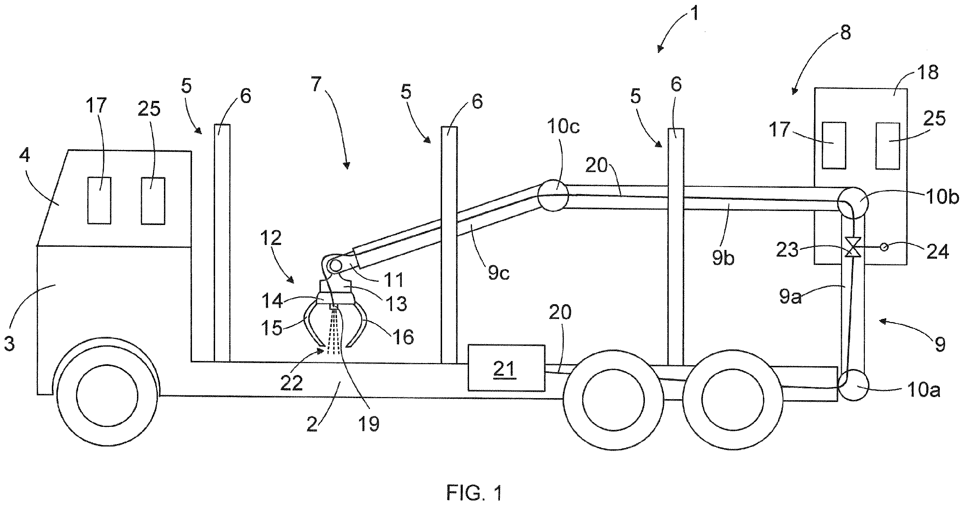

Fig. 1 schematically shows a side view of a timber truck 1 suitable for transporting logs and pulpwood. The timber truck 1 comprises a chassis 2 which can constitute at least a part of a frame of the timber truck 1. On top of the chassis 2 is arranged an engine room 3 in which are located an engine and possible additional devices, being evident for those skilled in the art and not shown here for clarity, for providing power as well as for moving the timber truck 1 and using additional equipment possible attached to the timber truck 1. Above the engine room 3 is located a cabin 4 which comprises means for controlling the timber truck 1, being evident for those skilled in the art and not shown here for clarity, and which can further comprise control means for controlling the operation of additional equipment possibly attached to the timber truck 1.

Furthermore, on top of the chassis 2 of the timber truck 1 are arranged pylons 5 at a distance from each other in the longitudinal direction of the timber truck 1 which pylons comprise vertical profiles 6 located on the sides of the timber truck 1 substantially in the vertical direction and horizontal profiles passing on top of the chassis 2 of the timber truck 1 across it substantially in the horizontal direction and connecting said vertical profiles 6 from their lower part, the horizontal profiles remaining invisible behind the vertical profiles in Fig. 1. The pylons 5 together with the chassis 2 of the timber truck 1 limit a load space 7 of the timber truck 1.

The timber truck 1 constitutes a possible transport means for transporting wood material, in this case logs or pulpwood. It is possible to connect to the timber truck 1 one or more trailers equipped with pylons 5, whereby the timber truck 1 and the one or more trailers connected to it constitute a combined vehicle, the timber truck 1 constituting the tractor of the combined vehicle.

Fig. 1 further schematically show a timber lifter 8 connected to the timber truck 1. The timber lifter 8 can be used for loading wood material, in the case of this example particularly logs or pulpwood, to the timber truck 1 and for unloading the load from the timber truck 1. For clarity, the timber truck 1 is shown unloaded. The timber lifter 8 can be connected to the timber truck 8 fixedly such that the timber lifter 8 continuously travels with the timber truck 1. Typically, the timber lifter 8 is still, in a way known to those skilled in the art, disconnectable substantially quick-releasably from the timber truck 1 and re-connectable to the timber truck 1, whereby the timber lifter 8 can be left on the site of the loading or unloading of wood material, if there are means suitable for loading or unloading wood material available on the loading or unloading site at the other end of the transport path. For clarity, Fig. 1 does not show legs included in the timber lifter 8 which legs are used for supporting the timber lifter 8 disconnected from the timber truck 1 in place on the ground.

The timber lifter 8 shown in Fig. 1 comprises a boom 9 constituted of three boom sections 9a, 9b, 9c i.e. a first boom section 9a, a second boom section 9b and a third boom section 9c. The boom 9 is connectable to the frame or some other load-bearing structure of the timber truck 1, the chassis 2 in Fig. 1, via a first joint structure 10a of the boom 9 arranged to a first end 9' of the boom 9 or to an inner end 9' of the boom 9 seen in relation to the timber truck 1. Via the first joint structure 10a, the first boom section 9a of the boom 9 and thus the whole boom 9 can be swivelled in relation to the timber truck 1. Between the first boom section 9a and the second boom section 9b of the boom 9, there is a second joint structure 10b, via which, the second boom section 9b can be swivelled in relation to the first boom section 9a. Between the second boom section 9b and the third boom section 9c of the boom 9, there is a third joint structure 10c, via which, the third boom section 9c can be swivelled in relation to the second boom section 9b. At the other end 9" of the boom 9 or at the outer end 9" of the boom 9 seen in relation to the timber truck 1, there is a bracket 11, via which, to the boom 9 is connectable a grab 12, which constitutes a possible handling means for wood material for picking logs or pulpwood to be supported by the handling means of wood material and the boom for transferring wood material by using the boom and said handling means of wood material for loading the wood material to the timber truck 1 or for unloading it from the timber truck 1. The grab 12 can also be replaced by some other grabbing device suitable for the purpose.

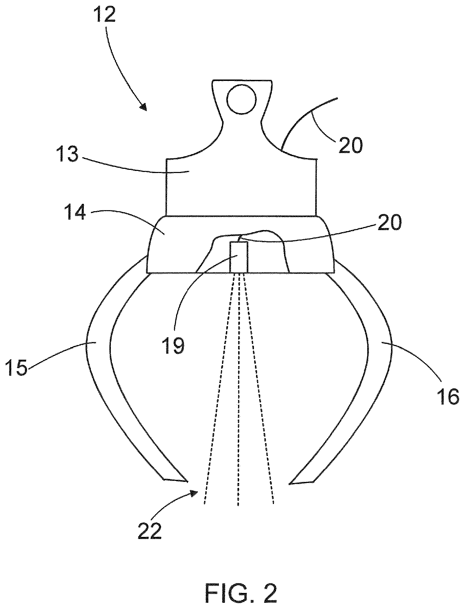

Figure 2 schematically shows a side view of a grab 12 similar to the one shown in Fig. 1 partially in cross-section. The grab 12 comprises a suspension section 13, via which, the grab 12 can be connected to the boom 9, such as to the bracket 11 in the boom 9. The grab 12 further comprises a bottom section 14 in connection with the suspension section 13, shown partially in cross-section in Fig. 1, and gripping jaws 15, 16. The gripping jaws 15, 16 are movable towards each other for closing the grab 12 for picking the wood material being handled to be supported by the grab 12 and the boom 9 and away from each other to lower the wood material picked to be supported by the grab 12 and the boom 9 out of the support of the grab 12 and the boom or for picking new wood material to be supported by the grab 12 and the boom 9. The position of the grab 12 and particularly the position of the gripping jaws 15, 16 around an imaginary vertical axis of the grab 12 can be changed either by an actuator affecting the position of the grab 12 or the bracket 11 for positioning the gripping jaws 15, 16 to a suitable position for fastening to the wood material being handled or for releasing the wood material being supported by the grab 12.

The above-described boom 9 and grab 12 constitute a possible assembly, by means of which, it is possible to load logs or pulpwood to the timber truck 1 or to unload it from the timber truck 1. However, the implementation of the boom 9 and the grab 12 can differ from the above-described, whereby the boom can also comprise boom sections fitted in connection with each other telescopically.

The timber lifter 8 is typically operated hydraulically and it includes a set of channels for pressurised medium and valves for conveying hydraulic fluid to the hydraulic actuators controlling or driving the different sections of the boom 9 and the grab 12. The power for operating the timber truck 8 can be taken from the engine of the timber truck 1 or from some other power unit arranged separately for this purpose in the timber truck 1. Alternatively, the boom 9 and the grab 12 can be operated by pressurized air or electricity. For clarity, the figures do not show the means mentioned in this paragraph for operating the boom 9 and the grab 12 being evident for those skilled in the art. The bottom section 14 constitutes a means, via which, the pressurized-medium channels brought to the grab 12 and the actuators utilized for using the gripping jaws 15, 16 are protected from hits or contacts from wood pieces picked to be supported by the grab 12. The bottom section 14 can be implemented e.g. as a plate structure.

The timber lifter 8 further includes one or more first control devices 17 for controlling the operation of the timber lifter 8 i.e. the boom 9 and the grab 12. The control device 17 can comprise one or more levers, push buttons or some other member or controller, via which, the operation of the timber lifter 8 can be controlled. The control device 17 can be located in an operator's cabin 18 possible arranged in the timber lifter 8, such as schematically shown in Fig. 1, or in some other section suitable for the purpose of the timber lifter 8 in timber lifters 8 without an operator's cabin 18. Alternatively, as schematically shown in Fig. 1, the control device 17 can be located in the cabin 4 of the timber truck 1, whereby it is possible to control the timber lifter 8 remotely from the cabin 4 of the timber truck 1. Then, it is possible to arrange to the timber truck 1 and/or the timber lifter 8 at least one camera, whereby the operation of the timber lifter 8 can be controlled via a camera image conveyed to at least one display in the cabin 4. Said display can then constitute a part of the control device 17.

Furthermore, the timber lifter 8 comprises a nozzle 19 arranged in the grab 12, via which nozzle, pressurized medium or fluid flow can be fed out of the grab 12. In Fig. 1, the nozzle 19 is shown located visible below the bottom section 14 but, in practice, the nozzle 19 is located in the grab 12 e.g. in a way shown in Fig. 2 such that the bottom section 14 protects it from hits or contacts of logs picked to be supported by the grab 12.

The timber lifter 8 additionally comprises a flow channel 20 arranged in the grab 12 and the boom 9, e.g. a flexible hose, via which, the nozzle 19 can be connected to a pressure source 21 for feeding a pressurized or compressed fluid flow via the flow channel 20 to the nozzle 19 and further out of the nozzle 19 as a fluid spray 22.

According to an embodiment, the fluid sprayed out of the nozzle 19 is air. Then, the nozzle 19 is a pressurized-air nozzle which in connected via a pressurized-air hose constituting the flow channel 20 to the pressure source 21 for feeding a pressurized air flow to the nozzle 19 and further out of the nozzle 19 as a pressurized-air spray. The hose, pipe or some other means suitable for the purpose constituting the flow channel 20 can be arranged to pass in the boom 9 and the grab 12 on the same path as the pressurized-medium channels conveying hydraulic fluid for actuators intended for using the boom 9 and the grab 12. The flow channel 20 can include a quick-release coupling between the nozzle 19 and the pressure source 21, not shown in the figures for clarity, which divides the flow channel 20 to a first section connectable to the timber truck 1 and a second section connectable to the timber lifter 8, whereby the timber lifter 8 is disconnectable from the side of the flow channel 20 from the timber truck 1 by opening said quick-release coupling.

By feeding pressurized air as a spray 22 out of the nozzle 19 and by simultaneously moving the grab 12 via the boom 9 controlled by the control device 17 in the longitudinal and lateral direction of the load space 7 of the timber truck 1, it is possible to clean an unloaded i.e. e.g. just unloaded load space 7 of the timber truck 1, such as the tops of the horizontal profiles of the pylons 5 and the chassis structures of the timber truck 1 out of waste remaining there, such as e.g. twigs, sand or snow, by means of said pressurized-air spray before the timber truck starts off. The pressurized-air spray removes waste from the truck and throws them away from the truck and its structures. In a corresponding way, it is possible to clean the load loaded onto the timber truck 1 of waste collected onto the load by feeding pressurized air as a spray 22 out of the nozzle 19 and by simultaneously moving the grab 12 controlled by the controlled device 17 via the boom 9 in the longitudinal and lateral direction of the load space 7 of the timber truck 1 above the load. During the cleaning work, the gripping jaws 15, 16 of the grab 12 can be kept, in a way shown in the figures, at least somewhat in their closed position, which also prevents the nozzle 19 from hitting the structures of the vehicle.

According to an embodiment, the pressure source 21 is an air compressor. The air compressor 21 can be an air compressor included in the equipment of the pressurized-air system of the timber truck 1, via which, it is also possible to control e.g. the operation of the pneumatic brakes of the timber truck 1. Because the pressure level required for the operation of the brakes of a modern combined vehicle is clearly lower than the maximum output level of the air compressor included in the equipment of the pressurized-air system of the combined vehicle, said air compressor already included in the equipment of the combined vehicle is fully capable of producing a sufficient pressure level also for providing a pressurized-air spray fed out of the nozzle 19. On the other hand as the brakes of the combined vehicle will lock when the pressure conveyed to them is too low, it is not necessary for the air compressor to be able to simultaneously produce sufficient pressure for forming the pressurized-air spray fed out of the nozzle 19 and for keeping the brakes of the combined vehicle open.

Alternatively, the air compressor constituting the pressure source 21 can be an air compressor separately arranged in the timber truck 1. Further alternatively, the pressure source 21 can be an air tank, such as e.g. a pneumatic accumulator the filling level of which is provided by an air compressor arranged in the timber truck in one way or another.

The timber lifter 8 further comprises at least one other control device for controlling the use of pressurized-air flow i.e. for allowing the pressurized-air flow to the nozzle 19 or for preventing the pressurized-air flow to the nozzle 19. According to an embodiment, said at least one other control device comprises a valve 23 arranged in the flow channel 20 and a valve guide 24 arranged into connection with it, via which valve guide the valve 23 can be controlled to an open position allowing the pressurized-air flow via the flow channel 20 to the nozzle 19 and to a closed position preventing the pressurized-air flow to the nozzle 19. According to an embodiment, the valve guide 24 can be positioned such that it is controllable by the driver of the timber truck 1 from the operator's cabin 18 at the same time as the driver of the timber truck 1 controls the grab 12 and the boom 9 by means of the first control device 17.

According to an embodiment, at least one other control device for controlling the use of the pressurized-air flow further comprises a controller 25 arranged separately from the valve guide 24 for controlling the valve guide 24 remotely for controlling the position of the valve 23. Said controller 25 can be located e.g. in the operator's cabin 18 of the timber lifter 8 or the cabin 4 of the timber truck 1 in accordance with where the first control device 17 for controlling the boom 9 and the grab 12 is located. Then, said valve 23 and valve guide 24 can also be located in the section of the flow channel 20 located in the timber truck 1.

An arrangement according to an embodiment does not include a valve 23 or its valve guide 24, but it is possible via the controller 25, when necessary, to remotely start the pressure source 21, such as an air compressor, for producing pressurized air and to stop it or control the opening and closing of a valve arranged in the pneumatic accumulator.

The solution described above provides a safe way to clean, after unloading and before starting off, the chassis 2 and the load space 7 of the timber truck 1 of waste remaining there, such as e.g. twigs, leaves, bark, sand or snow, such that there is no need for the driver of the timber truck 1 to walk on top of chassis structures and/or pylons. Using the above-described solution for cleaning a combined vehicle comprising one tractor vehicle and one trailer is about five minutes quicker than cleaning by brushing per one cleaning. If it is assumed that the combined vehicle is in use for 250 days a year and three loads are driven in one day, the time saved when using the described solution compared with brushing is 62.5 hours a year, which is the time the combined vehicle can be driven more. This increases the cost-effectiveness of the combined vehicle.

The solution described above also provides a safe and practically the only usable way to clean the load from the top of waste collected there during loading after the loading and before starting off. The solution is also simple utilizing means already in the timber truck 1 for producing a pressurized-air flow as well as light and easily installable also as a retrofitment in timber lifter already in use.

The nozzle 19 and the flow channel 20 described in the example above are arranged in a timber lifter 8 connectable to the timber truck 1, whereby both the power for using the timber lifter 8 and the pressurized air for providing a pressurized-air spray out of the nozzle are produced by equipment arranged in the timber truck 1. According to an embodiment, the means for producing pressurized air can also be arranged as a part of the timber lifter, whereby the required pressurized air can be produced solely by means arranged in the timber lifter. According to another embodiment, both the means for producing pressurized air and the power output unit for using the boom and the grab of the timber lifter can be arranged as a part of the timber lifter, whereby the timber lifter can be an individually operating timber lifter separate from the timber truck 1. If such a timber lifter is further provided with wheels, tracks or some other corresponding means enabling moving and a power unit suitable for driving said means, an independently operating and moving timber lifter separate from the timber truck 1 is provided.

In the above example, one nozzle 19 was arranged into connection with the grab 12 but there can be more than one of said nozzles 19. Additionally, it is also possible to arrange said one or more nozzles in addition to or instead of the grab 12 to the boom 9.

The timber lifter provided with the grab 12 is particularly suitable for handling logs, pulpwood and logging waste, whereby the lifter provided with the grab 12 can constitute a load-handling device suitable for handling logs, pulpwood or logging waste, the grab 12 constituting a handling means of wood material suitable for handling logs, pulpwood or logging waste. If the grab 12 is replaced by a bucket, a load-handling device suitable for the handling of e.g. wood chips or sawdust is provided, whereby one or more nozzles 19 can be located in connection with either the bucket and/or the boom supporting it.

It is also possible to apply the described solution in load-handling devices used in forestry machines, such as e.g. forwarders or harvesters. According to an embodiment used in forwarders or harvesters, the means for providing the pressurized-air flow can also be replaced by means for providing pressurized-water flow, such as e.g. by a water tank and a pump connected to the water thank and the flow channel to produce a water spray flowing out of the nozzle. Said water spray can be used e.g. for extinguishing small fires started by sparks possible created in connection with harvesting. Said means for providing a pressurized-water flow can also be located beside the means providing the pressurized-air flow, whereby the flow channel can be common for both the means for producing the pressurized-water flow and the means for producing the pressurized-air flow. Then, it is possible to arrange to the flow channel a valve which, as a response for corresponding control, allows the flow of either the pressurized water or the pressurized air to the flow channel and further out of the nozzle.

Those skilled in the art will find it obvious that, as technology advances, the basic idea of the invention may be implemented in many different ways. The invention and its embodiments are thus not restricted to the above-described examples but may vary within the scope of the claims.

## Claims

1. A transport means for transporting wood material, which comprises a load-handling device for loading and/or unloading a load of wood material, the load-handling device comprising:
at least one boom (9),
at least one handling means of wood material arranged to said at least one boom (9) for picking wood material to be supported by the handling means of wood material and the boom (9) for transferring wood material by using the boom (9) and said handling means of wood material,
at least one first control device (17) for controlling the use of the boom (9) and/or handling means of wood material,
wherein the transport means is a timber truck (1),
wherein the load-handling device is a timber lifter (8) which comprises the boom (9), and the handling means is a grab (12) arranged on the outer end of the boom (9),
**characterized in that**
the timber lifter (8) further comprises at least one nozzle (19) arranged in the boom (9) and/or the grab (12), at least one flow channel (20) connected to the nozzle (19) via which flow channel the nozzle (19) is connectable to at least one pressure source (21) for feeding a pressurized fluid flow via the flow channel (20) to the nozzle (19) for feeding the fluid flow out of the nozzle (19), and at least one second control device for controlling the use of the fluid flow.

2. The transport means according to claim 1, **characterized in that** said at least one second control device comprises at least one valve (23) arranged in the flow channel (20) as well as a valve guide (24) arranged into connection with the valve (23) for controlling the position of said valve (23).

3. The transport means according to claim 2, **characterized in that** said at least one second control device comprises at least one controller (25) arranged separately from the valve guide (24) for controlling the valve guide (24) remotely for controlling the position of the valve (23).

4. The transport means according to any one of the previous claims, **characterized in that** said at least one second control device comprises at least one controller (25) for remotely controlling the operation of the pressure source (21).

5. The transport means according to any one of the previous claims, **characterized in that** said at least one first control device (17) comprises at least one controller arranged separately from the boom (9) and/or the handling means of wood material for remotely controlling the operation of the boom (9) and/or the handling means of wood material.

6. The transport means according to any one of the previous claims, **characterized in that** the load-handling device comprises an operator's cabin (18) and at least one first control device (17) located in the operator's cabin (18) for controlling the operation of the boom (9) and/or the handling means of wood material and at least one second control device for controlling the use of the fluid flow.

7. The transport means according to any one of previous claims, **characterized in that** at least one pressure source (21) is arranged as a part of the load-handling device.

8. The transport means according to claim 1, **characterized in that** at least one pressure source (21) is arranged as a part of a vehicle intended for transporting wood material.

9. The transport means according to any one of the previous claims, **characterized in that** the fluid is air.

10. The transport means according to any one of the previous claims, **characterized in that** the pressure source (21) is an air compressor or an air tank.

11. The use of a load-handling device, fitted to the transport means for transporting wood material according to any one of claims 1 - 10, for cleaning the transport means and/or a load loaded onto the transport means.

## Patentansprüche

1. Transportmittel zum Transportieren von Holzmaterial, das eine Lasthandhabungsvorrichtung zum Laden und/oder Entladen einer Last von Holzmaterial umfasst, wobei die Lasthandhabungsvorrichtung Folgendes umfasst:
mindestens einen Ausleger (9),
mindestens ein Handhabungsmittel für Holzmaterial, das zum Aufnehmen von Holzmaterial, das vom Handhabungsmittel für Holzmaterial und vom Ausleger (9) zum Übergeben von Holzmaterial unter Verwendung des Auslegers (9) und des Handhabungsmittels für Holzmaterial zu stützen ist, an dem mindestens einen Ausleger (9) angeordnet ist,
mindestens eine erste Steuervorrichtung (17) zum Steuern der Verwendung des Auslegers (9) und/oder des Handhabungsmittels für Holzmaterial,
wobei das Transportmittel ein Langholz-Lkw (1) ist,
wobei die Lasthandhabungsvorrichtung ein Langholzheber (8) ist, der den Ausleger (9) umfasst, und das Handhabungsmittel ein Greifer (12) ist, der am äußeren Ende des Auslegers (9) angeordnet ist,
**dadurch gekennzeichnet, dass**
der Langholzheber (8) ferner mindestens eine Düse (19), die im Ausleger (9) und/oder im Greifer (12) angeordnet ist, mindestens einen Durchflusskanal (20), der mit der Düse (19) verbunden ist, wobei die Düse (19) zum Zuführen eines unter Druck stehenden Fluidstroms via den Durchflusskanal (20) zur Düse (19) zum Zuführen des Fluidstroms aus der Düse (19) via den Durchflusskanal mit mindestens einer Druckquelle (21) verbindbar ist, und mindestens eine zweite Steuervorrichtung zum Steuern der Verwendung des Fluidstroms umfasst.

2. Transportmittel nach Anspruch 1, **dadurch gekennzeichnet, dass** die mindestens eine zweite Steuervorrichtung mindestens ein Ventil (23), das im Durchflusskanal (20) angeordnet ist, sowie eine Ventilführung (24), die zum Steuern der Position des Ventils (23) in Verbindung mit dem Ventil (23) angeordnet ist, umfasst.

3. Transportmittel nach Anspruch 2, **dadurch gekennzeichnet, dass** die mindestens eine zweite Steuervorrichtung mindestens eine Steuerung (25), die zum Fernsteuern der Ventilführung (24) separat von der Ventilführung (24) angeordnet ist, zum Steuern der Position des Ventils (23) umfasst.

4. Transportmittel nach einem der vorhergehenden Ansprüche, **dadurch gekennzeichnet, dass** die mindestens eine zweite Steuervorrichtung zum Fernsteuern des Betriebs der Druckquelle (21) mindestens eine Steuerung (25) umfasst.

5. Transportmittel nach einem der vorhergehenden Ansprüche, **dadurch gekennzeichnet, dass** die mindestens eine erste Steuervorrichtung (17) zum Fernsteuern des Betriebs des Auslegers (9) und/oder des Handhabungsmittels für Holzmaterial mindestens eine Steuerung umfasst, die separat vom Ausleger (9) und/oder vom Handhabungsmittel für Holzmaterial angeordnet ist.

6. Transportmittel nach einem der vorhergehenden Ansprüche, **dadurch gekennzeichnet, dass** die Lasthandhabungsvorrichtung eine Bedienerkabine (18) und mindestens eine erste Steuervorrichtung (17), die sich in der Bedienerkabine (18) befindet, zum Steuern des Betriebs des Auslegers (9) und/oder des Handhabungsmittels für Holzmaterial sowie mindestens eine zweite Steuervorrichtung zum Steuern der Verwendung des Fluidstroms umfasst.

7. Transportmittel nach einem der vorhergehenden Ansprüche, **dadurch gekennzeichnet, dass** als ein Teil der Lasthandhabungsvorrichtung mindestens eine Druckquelle (21) angeordnet ist.

8. Transportmittel nach Anspruch 1, **dadurch gekennzeichnet, dass** als ein Teil eines Fahrzeugs, das zum Transportieren von Holzmaterial vorgesehen ist, mindestens eine Druckquelle (21) angeordnet ist.

9. Transportmittel nach einem der vorhergehenden Ansprüche, **dadurch gekennzeichnet, dass** das Fluid Luft ist.

10. Transportmittel nach einem der vorhergehenden Ansprüche, **dadurch gekennzeichnet, dass** die Druckquelle (21) ein Luftverdichter oder ein Lufttank ist.

11. Verwendung einer Lasthandhabungsvorrichtung, die am Transportmittel zum Transportieren von Holzmaterial nach einem der Ansprüche 1-10 angebracht ist, zum Reinigen des Transportmittels und/oder einer auf das Transportmittel geladenen Last.

## Revendications

1. Moyen de transport pour transporter un matériau en bois, qui comprend un dispositif de maniement de charge pour charger et/ou décharger une charge de matériau en bois, le dispositif de maniement de charge comprenant :
au moins une flèche (9),
au moins un moyen de maniement de matériau en bois agencé sur ladite au moins une flèche (9) pour prendre le matériau en bois destiné à être supporté par le moyen de maniement de matériau en bois et la flèche (9) pour transférer le matériau en bois en utilisant la flèche (9) et ledit moyen de maniement de matériau en bois,
au moins un premier dispositif de commande (17) pour commander l'utilisation de la flèche (9) et/ou du moyen de maniement de matériau en bois,
dans lequel le moyen de transport est un camion de bois de charpente (1),
dans lequel le dispositif de maniement de charge est un dispositif de levage de bois de charpente (8) qui comprend la flèche (9) et le moyen de maniement est un grappin (12) agencé sur l'extrémité externe de la flèche (9),
**caractérisé en ce que** :
le dispositif de levage de bois de charpente (8) comprend en outre au moins une buse (19) agencée dans la flèche (9) et/ou le grappin (12), au moins un canal d'écoulement (20) raccordé à la buse (19), grâce auquel canal d'écoulement, la buse (19) peut être raccordée à au moins une source de pression (21) pour alimenter un écoulement de fluide sous pression via le canal d'écoulement (20), à la buse (19) pour amener l'écoulement de fluide hors de la buse (19), et au moins un second dispositif de commande pour commander l'utilisation de l'écoulement de fluide.

2. Moyen de transport selon la revendication 1, **caractérisé en ce que** ledit au moins un second dispositif de commande comprend au moins une valve (23) agencée dans le canal d'écoulement (20) ainsi qu'un guide de valve (24) agencé en raccordement avec la valve (23) pour commander la position de ladite valve (23).

3. Moyen de transport selon la revendication 2, **caractérisé en ce que** ledit au moins un second dispositif de commande comprend au moins un organe de commande (25) agencé séparément du guide de valve (24) pour commander le guide de valve (24) à distance pour commander la position de la valve (23) .

4. Moyen de transport selon l'une quelconque des revendications précédentes, **caractérisé en ce que** ledit au moins un second dispositif de commande comprend au moins un organe de commande (25) pour commander à distance le fonctionnement de la source de pression (21).

5. Moyen de transport selon l'une quelconque des revendications précédentes, **caractérisé en ce que** ledit au moins un premier dispositif de commande (17) comprend au moins un organe de commande agencé séparément de la flèche (9) et/ou du moyen de maniement de matériau en bois pour commander à distance le fonctionnement de la flèche (9) et/ou du moyen de maniement de matériau en bois.

6. Moyen de transport selon l'une quelconque des revendications précédentes, **caractérisé en ce que** le dispositif de maniement de charge comprend une cabine d'opérateur (18) et au moins un premier dispositif de commande (17) positionné dans la cabine d'opérateur (18) pour commander le fonctionnement de la flèche (9) et/ou du moyen de maniement de matériau en bois et au moins un second dispositif de commande pour commander l'utilisation de l'écoulement de fluide.

7. Moyen de transport selon l'une quelconque des revendications précédentes, **caractérisé en ce qu'**au moins une source de pression (21) est agencée comme faisant partie du dispositif de maniement de charge.

8. Moyen de transport selon la revendication 1, **caractérisé en ce qu'**au moins une source de pression (21) est agencée comme faisant partie d'un véhicule prévu pour transporter le matériau en bois.

9. Moyen de transport selon l'une quelconque des revendications précédentes, **caractérisé en ce que** le fluide est de l'air.

10. Moyen de transport selon l'une quelconque des revendications précédentes, **caractérisé en ce que** la source de pression (21) est un compresseur d'air ou un réservoir d'air.

11. Utilisation d'un dispositif de maniement de charge, monté sur le moyen de transport pour transporter le matériau en bois selon l'une quelconque des revendications 1 à 10, afin de nettoyer le moyen de transport et/ou la charge chargée sur le moyen de transport.
